# EUROPEAN PATENT SPECIFICATION

(11) **EP 1 747 967 B1**
(45) Date of publication and mention of the grant of the patent: **21.04.2010**
(21) Application number: 06254012.5
(22) Date of filing: 31.07.2006
(51) Int. Cl.: B62D 1/184

(54) **Detent device and vehicle steering column incorporating same**
Rastvorrichtung und Fahrzeuglenksäule mit einer solchen Vorrichtung
Dispositif d'arrêt et colonne de direction pour véhicule comprenant un tel dispositif

(30) Priority: 30.07.2005 GB 0515731
(43) Date of publication of application: 31.01.2007
(73) Proprietor: NSK Steering Systems Europe Limited, Maidenhead, Berkshire SL6 6TB (GB)
(72) Inventor: Ball, Iain David, Rowley's Green Coventry CV6 6PA (GB)
(74) Representative: Feakins, Graham Allan

(56) References cited:
- EP-A- 1 445 168
- WO-A-2004/069629
- FR-A1- 2 834 680
- JP-A- 9 272 446

## Description

This invention relates to a detent device and to a vehicle steering column incorporating same.

Steering column clamping mechanisms are provided for adjustable steering columns, in order to enable the steering column to be held in a rake-adjustable and/or reach adjustable position to suit the driver.

Such a clamping mechanism is known from EP-0 600 700, in which the clamping mechanism includes a cam on camming surfaces of which rollers held in a body freely run. A bolt extends from the cam and roller arrangement through a mounting bracket for the steering column and through a fixed member to the steering column.

The WO 2004/069629 A discloses the preamble of claim 1.

In such steering column clamping mechanisms, the cam arrangement can become worn, perhaps with the chance that the steering column clamping handle, acting through the cam, can go into an unclamped condition unintentionally. This might be possible if the camming surface(s) of the cam is/are subject to wear through use.

According to the present invention, there is provided a device having a first part and a second part, one part being rotatable relatively to the other part, wherein one of said parts having detent means to provide a radial detent resistance to relative rotation between the parts, **characterised in that** one of said parts has resilient detent means to provide a detent resistance in a direction substantially parallel to the axis of relative rotation between the parts; said resilient detent means being in the form of a resilient tab depending from one of the parts and extending in a substantially radial or tangential direction relative to the axis of rotation; wherein the resilient tab extends in a different plane to other surfaces of the part to which it is joined, so as to leave clearance between the tab and the adjacent surface of that part to allow the tab to be depressed by a portion of the other part during relative rotation between the two parts, thereby to provide the detent resistance in the direction substantially parallel to the axis of relative rotation; and wherein the part of the device into which the resilient detent means comes into contact during the relative rotation is provided with an up-standing post or the like designed to engage and interact with the resilient detent means.

The device may be a camming mechanism.

There may be two detents, one to provide the radial detent resistance to relative rotation and the other, resilient detent being to provide the detent resistance in the axial direction.

The first part may be a camming surface, whilst the second part may be a cam follower. The camming surface may provide the radial detent resistance.

The device may form part of a vehicle steering column clamping mechanism, in particular it may be incorporated in a vehicle steering column clamping mechanism clamping handle arrangement.

The resilient detent means may be of a different material to the detent means provided for the radial detent resistance.

The resilient detent means may be profiled and/or formed in a variety of ways to suit the required torque effort when the relative rotation between the two parts causes one part to meet the other part carrying the resilient detent means.

More than one resilient detent means may be provided, such as a plurality of the resilient tabs.

The or each resilient tab may be provided with an over-ride (or under-ride) portion to enable the tab to apply a greater effort of axial detent resistance when the resilient tab is in relative rotation to the other part of the device, in order to provide a run-in or "home" position to hold the first and second parts in a locked relationship.

The invention also extends to an adjustable steering column mechanism having a clamping handle incorporating a device essentially as defined above.

For a better understanding of the invention and to show how the same may be carried into effect, reference will now be made, by way of example, to the accompanying drawings, in which:-
Fig. 1 is a diagrammatic perspective view of one part of a camming device for incorporation in a rake and/or reach-adjustable steering column for a vehicle,
Fig. 2 is a diagrammatic sectional view through first and second parts of the camming device to show the principle supporting the present device,
Fig. 3 is a diagrammatic view of the two parts of the camming device separated to show the interrelationship between the two parts illustrated in Fig. 2, and,
Fig. 4 is a view similar to Fig. 3 but showing the two parts combined and in a steering column clamping handle locked condition.

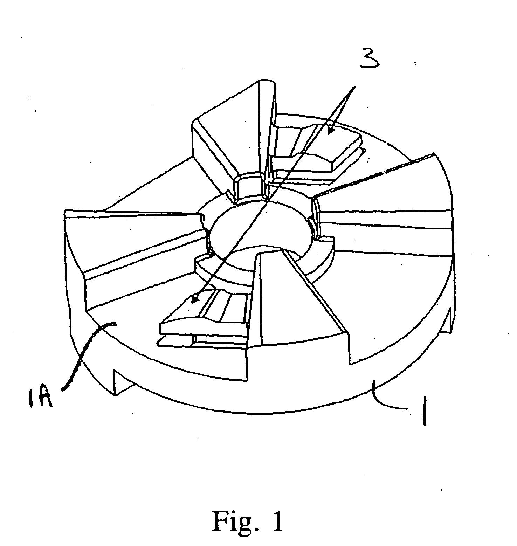

Fig. 1 shows one part of a camming device for a clamping handle of an adjustable steering column for a vehicle.

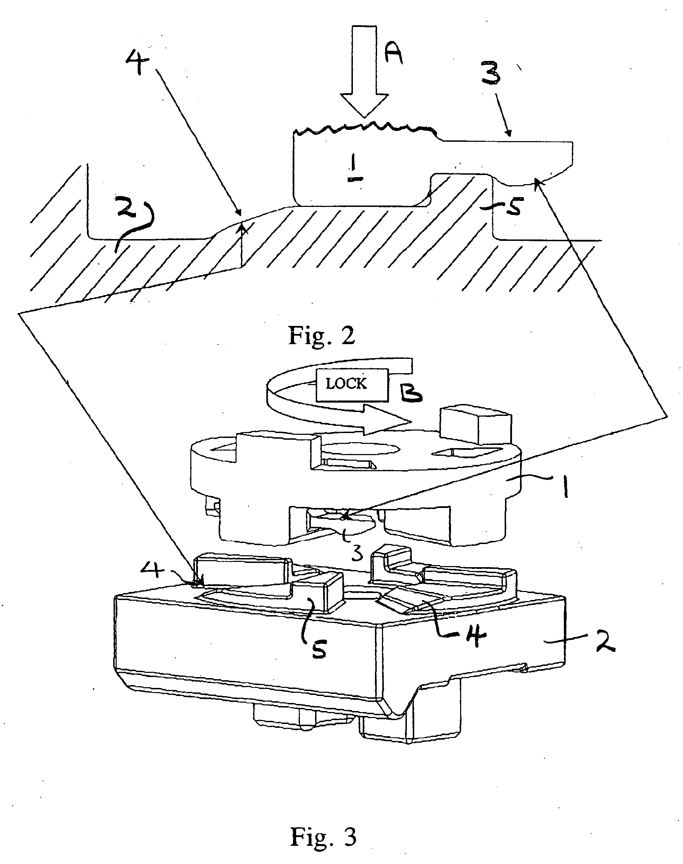

One part 1 is arranged to be in relative rotation with a part 2, which is shown in Figs. 2, 3 and 4. In the form illustrated, the resilient detent means is in the form of resilient tabs 3, which are cantilevered out over the adjacent surface 1A of the part 1. In addition or alternatively, the or each tab 3 may be cantilevered out over a hollowed-out portion of the part 1 so as to allow the tab 3 to be depressed into the hollow during the relative rotation between the two parts 1, 2.

In the form illustrated, the part 1 is a cam follower and the part 2 provides the camming surface against which the cam follower runs during relative rotation between the parts.

Figs. 2 and 3 illustrate diagrammatically a cam profile 4, only a simple section being illustrated for the present purposes.

Arrow A in Fig. 2 shows the direction of axial detent when the resilient tab 3 runs over and engages a post 5 or other protrusion of the part 2.

The arrow B in Fig. 3 clearly shows the direction of rotation of the cam follower in order to bring the two parts 1, 2 into a locking relationship with the tabs 3 engaging the posts 5.

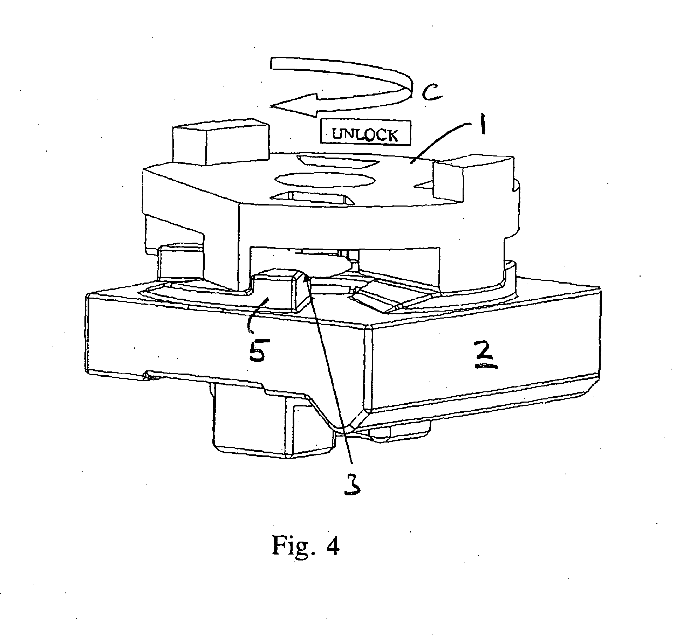

The arrow C in Fig. 4 shows the parts 1 and 2 in their relatively locked positions, with the resilient tabs 3 abutting the posts 5 of the part 2 and engaging with their override features over the posts 5.

It will be appreciated that the present device provides resilient detent means in the form of the resilient tabs 3, which are designed within the cam or cam follower and which operates independently of the cam profile to provide an axial detent feature. The number of resilient detent tabs are not dependent on the number of cam profiles. The actual profiles of the resilient tabs(s) 3 are not restricted to the illustrated profile.

It will be appreciated that because the or each resilient tab operates independently of the cam profile; it is not directly affected by cam wear. Also, the resilient detent means allows the torque effort of the steering column clamping handle to be tuned to suit customer load specification, without being directly affected by cam wear.

The risk of the cam handle going into an unclamped condition is also minimised, because it operates independently from the cam profile.

It will be further appreciated that the present device may be used in any situation where an independent detent "feel" is required.

The cam arrangement can apply to a cam device with rolling members between the cam and cam follower, a cam-to-cam device, a cam-to-cam driver device or any other type of cam device.

## Claims

1. A device having a first part (1) and a second part (2), one part being rotatable relatively to the other part, wherein one of said parts (1,2) has detent means to provide a radial detent resistance to relative rotation between the parts, **characterised in that** one of said parts (1,2) has resilient detent means (3) to provide a detent resistance in a direction substantially parallel to the axis of relative rotation between the parts; said resilient detent means being in the form of a resilient tab (3) depending from one of the parts (1) and extending in a substantially radial or tangential direction relative to the axis of rotation; wherein the resilient tab (3) extends in a different plane to other surfaces of the part to which it is joined, so as to leave clearance between the tab and the adjacent surface of that part to allow the tab to be depressed by a portion of the other part during relative rotation between the two parts, thereby to provide the detent resistance in the direction substantially parallel to the axis of relative rotation; and wherein the part (2) of the device into which the resilient detent means (3) comes into contact during the relative rotation is provided with an up-standing post (5) or the like designed to engage and interact with the resilient detent means.

2. A device according to claim 1 and being in the form of a camming mechanism (3,4).

3. A device according to claim 1 or 2, and comprising two detents, one (5) to provide the radial detent resistance to relative rotation and the other, resilient detent (3) being to provide the detent resistance in the axial direction.

4. A device according to claim 1, 2 or 3, wherein the first part (4) is a camming surface.

5. A device according to any one of the preceding claims, wherein the second part is a cam follower (3).

6. A device according to any one of the preceding claims, wherein the resilient detent means is of a different material to the detent means provided for the radial detent resistance.

7. A device according to any one of the preceding claims, wherein the resilient detent means (3) is profiled and/or formed to suit the required torque effort when the relative rotation between the two parts causes one part (2) to meet the other part (1) carrying the resilient detent means.

8. A device according to any one of the preceding claims, wherein a plurality of resilient detent means (3) is provided.

9. A device according to any one of the preceding claims, wherein the or each resilient tab (3) is provided with an over-ride or under-ride portion to enable the tab to apply a greater effort of axial detent resistance when the resilient tab is in relative rotation to the other part of the device, in order to provide a run-in or home position to hold the first and second parts in locked relationship.

10. A device according to any one of the preceding claims, and being a camming mechanism comprising rolling members between a cam and cam follower.

11. An adjustable steering column mechanism for a vehicle incorporating a device according to any one of the preceding claims.

12. A steering column mechanism according to claim 11 and having a clamping handle incorporating said device.

## Patentansprüche

1. Eine Vorrichtung mit einem ersten Teil (1) und einem zweiten Teil (2), wobei ein Teil relativ zu dem anderen Teil drehbar ist, wobei einer der Teile (1, 2) ein Einrastmittel aufweist, um einen radialen Einrastwiderstand gegenüber relativer Drehung zwischen den Teilen bereitzustellen, **dadurch gekennzeichnet, dass** einer der Teile (1, 2) ein nachgiebiges Einrastmittel (3) aufweist, um einen Einrastwiderstand in einer zu der Achse der relativen Drehung zwischen den Teilen im Wesentlichen parallelen Richtung bereitzustellen; wobei das nachgiebige Einrastmittel in Form einer nachgiebigen Nase (3), die von einem der Teile (1) abhängig ist und sich in einer im Wesentlichen radialen oder tangentialen Richtung relativ zu der Drehachse erstreckt, vorliegt; wobei sich die nachgiebige Nase (3) in einer anderen Ebene als andere Oberflächen des Teils, mit dem sie verbunden ist, erstreckt, um zwischen der Nase und der angrenzenden Oberfläche dieses Teils einen Zwischenraum zu lassen, um zu ermöglichen, dass die Nase von einem Abschnitt des anderen Teils während relativer Drehung zwischen den zwei Teilen herabgedrückt werden kann, um dadurch den Einrastwiderstand in der zu der Achse der relativen Drehung im Wesentlichen parallelen Richtung bereitzustellen; und wobei der Teil (2) der Vorrichtung, mit dem das nachgiebige Einrastmittel (3) während der relativen Drehung in Kontakt kommt, mit einer aufrechten Säule (5) oder dergleichen, die ausgelegt ist, um in das nachgiebige Einrastmittel einzugreifen und mit ihm zusammenzuwirken, versehen ist.

2. Vorrichtung gemäß Anspruch 1 und die in Form eines Eingriffmechanismus (3, 4) vorliegt.

3. Vorrichtung gemäß Anspruch 1 oder 2 und die zwei Rastungen beinhaltet, eine (5), um den radialen Einrastwiderstand gegenüber relativer Drehung bereitzustellen, und die andere, nachgiebige Rastung (3), um den Einrastwiderstand in der axialen Richtung bereitzustellen.

4. Vorrichtung gemäß Anspruch 1, 2 oder 3, wobei der erste Teil (4) eine Eingriffoberfläche ist.

5. Vorrichtung gemäß einem der vorhergehenden Ansprüche, wobei der zweite Teil ein Nockenstößel (3) ist.

6. Vorrichtung gemäß einem der vorhergehenden Ansprüche, wobei das nachgiebige Einrastmittel aus einem anderen Material ist als das Einrastmittel, das für den radialen Einrastwiderstand bereitgestellt ist.

7. Vorrichtung gemäß einem der vorhergehenden Ansprüche, wobei das nachgiebige Einrastmittel (3) profiliert und/oder gebildet ist, um sich für den erforderlichen Drehmomentaufwand zu eignen, wenn die relative Drehung zwischen den zwei Teilen bewirkt, dass ein Teil (2) auf den anderen Teil (1), der das nachgiebige Einrastmittel trägt, trifft.

8. Vorrichtung gemäß einem der vorhergehenden Ansprüche, wobei eine Vielzahl von nachgiebigen Einrastmitteln (3) bereitgestellt ist.

9. Vorrichtung gemäß einem der vorhergehenden Ansprüche, wobei die oder jede nachgiebige Nase (3) mit einem Freilauf- oder Unterfahrabschnitt versehen ist, um zu ermöglichen, dass die Nase einen größeren Aufwand axialen Einrastwiderstands anwendet, wenn sich die nachgiebige Nase in relativer Drehung zu dem anderen Teil der Vorrichtung befindet, um eine Einfahr- oder Ausgangsposition bereitzustellen, um den ersten Teil und den zweiten Teil in verriegelter Beziehung zu halten.

10. Vorrichtung gemäß einem der vorhergehenden Ansprüche und die ein Eingriffmechanismus ist, der Rollelemente zwischen einer Nocke und einem Nockenstößel beinhaltet.

11. Ein einstellbarer Lenksäulenmechanismus für ein Fahrzeug, der eine Vorrichtung gemäß einem der vorhergehenden Ansprüche inkorporiert.

12. Lenksäulenmechanismus gemäß Anspruch 11 und der einen Klemmgriff, der die Vorrichtung inkorporiert, aufweist.

## Revendications

1. Un dispositif présentant une première partie (1) et une deuxième partie (2), une partie étant à même de tourner relativement à l'autre partie, où l'une desdites parties (1, 2) présente un moyen d'arrêt pour fournir une résistance d'arrêt radiale à la rotation relative entre les parties, **caractérisé en ce que** l'une desdites parties (1, 2) présente un moyen d'arrêt élastique (3) pour fournir une résistance d'arrêt dans une direction substantiellement parallèle à l'axe de rotation relative entre les parties ; ledit moyen d'arrêt élastique étant sous forme de taquet élastique (3) dépendant de l'une des parties (1) et s'étendant dans une direction substantiellement radiale ou tangentielle relativement à l'axe de rotation ; où le taquet élastique (3) s'étend dans un plan différent par rapport aux autres surfaces de la partie à laquelle il est joint, de façon à laisser un jeu entre le taquet et la surface adjacente de cette partie pour permettre au taquet d'être enfoncé par une portion de l'autre partie au cours de la rotation relative entre les deux parties, afin de fournir de ce fait la résistance d'arrêt dans la direction substantiellement parallèle à l'axe de rotation relative ; et où la partie (2) du dispositif dans laquelle le moyen d'arrêt élastique (3) entre en contact au cours de la rotation relative est munie d'un montant érigé (5) ou analogue conçu pour se mettre en prise et interagir avec le moyen d'arrêt élastique.

2. Un dispositif selon la revendication 1, lequel est en forme de mécanisme à came (3, 4).

3. Un dispositif selon la revendication 1 ou la revendication 2, et comprenant deux arrêts, l'un (5) pour fournir la résistance d'arrêt radiale à la rotation relative et l'autre, l'arrêt élastique (3), pour fournir la résistance d'arrêt dans la direction axiale.

4. Un dispositif selon la revendication 1, la revendication 2 ou la revendication 3, où la première partie (4) est une surface de came.

5. Un dispositif selon n'importe laquelle des revendications précédentes, où la deuxième partie est une contre-came (3).

6. Un dispositif selon n'importe laquelle des revendications précédentes, où le moyen d'arrêt élastique est en un matériau différent du moyen d'arrêt fourni pour la résistance d'arrêt radiale.

7. Un dispositif selon n'importe laquelle des revendications précédentes, où le moyen d'arrêt élastique (3) est profilé et / ou formé pour accommoder l'effort de couple requis lorsque la rotation relative entre les deux parties amène une partie (2) à rencontrer l'autre partie (1) portant le moyen d'arrêt élastique.

8. Un dispositif selon n'importe laquelle des revendications précédentes, où une pluralité de moyens d'arrêts élastiques (3) sont fournis.

9. Un dispositif selon n'importe laquelle des revendications précédentes, où le ou chaque taquet élastique (3) est muni d'une portion de surpassement ou de soupassement pour permettre au taquet d'exercer un plus grand effort de résistance d'arrêt axiale lorsque le taquet élastique est en rotation relative par rapport à l'autre partie du dispositif, afin de fournir une position de rentrée ou de repos pour tenir les première et deuxième parties en relation verrouillée.

10. Un dispositif selon n'importe laquelle des revendications précédentes, lequel est un mécanisme à came comprenant des éléments roulants entre une came et une contre-came.

11. Un mécanisme de colonne de direction ajustable pour un véhicule incorporant un dispositif selon n'importe laquelle des revendications précédentes.

12. Un mécanisme de colonne de direction selon la revendication 11 et présentant une poignée de serrage incorporant ledit dispositif.
